# EUROPÄISCHE PATENTANMELDUNG

(11) **EP 3 736 961 A1**
(43) Veröffentlichungstag der Anmeldung: **11.11.2020**
(21) Anmeldenummer: 20168141.8
(22) Anmeldetag: 06.04.2020
(51) Int. Cl.: H02M 3/156, H02M 7/48, B60L 3/00, B60L 9/18

(54) **ELEKTRISCHES ANTRIEBSSYSTEM UND BETRIEBSVERFAHREN**

(30) Priorität: 09.05.2019 DE 102019206704
(71) Anmelder: Audi AG, 85045 Ingolstadt (DE)
(72) Erfinder: Eberhart, Philipp, 85051 Ingolstadt (DE)

(57) **Zusammenfassung**

Die vorliegende Erfindung betrifft ein Antriebssystem für ein elektrisch angetriebenes Kraftfahrzeug und ein Verfahren zum Betreiben des Antriebssystems, das die Lebensdauer eines Leistungsmoduls verlängert, das Bestandteil eines Pulswechselrichters des Antriebssystems ist.

## Beschreibung

Die vorliegende Erfindung betrifft ein Antriebssystem für ein elektrisch angetriebenes Kraftfahrzeug und ein Verfahren zum Betreiben des Antriebssystems, das die Lebensdauer eines Leistungsmoduls verlängert, das Bestandteil eines Pulswechselrichters des Antriebssystems ist.

Beim Betrieb eines Elektro- oder Hybridfahrzeugs wird der Wechselstrom für die elektrischen Maschinen des Antriebs über das Leistungsmodul in einem Wechselrichter aus Gleichstrom bei Batteriespannung generiert. Beim Schalten der Leistungshalbleiter des Leistungsmoduls werden durch Verluste thermomechanische Spannungen erzeugt, welche über die Zeit zum Versagen der Bauteile führen. Unter bestimmten Betriebsbedingungen kann die Lebensdauer der Leistungshalbleiter kürzer werden, als es den Anforderungen entspricht, und das Bauteil kann vorzeitig ausfallen.

Die vorliegende Erfindung hat sich die Aufgabe gestellt, einen vorzeitigen Ausfall der Leistungshalbleiter des Leistungsmoduls zu verhindern, d.h. sicherzustellen, dass die Lebensdauer der Leistungshalbleiter mindestens den Vorgaben für die Lebensdauer des Antriebs entspricht.

Aus der DE 40 13 506 A1 ist ein elektrisches Antriebssystem bekannt mit einer gegebenenfalls aufladbaren Gleichspannungsquelle, aus der über einen Wechselrichter eine Drehfeldmaschine gespeist wird, mit einem zwischen der Gleichspannungsquelle und dem Wechselrichter geschalteten Spannungswandler zur Erhöhung der Wechselrichtereingangsspannung gegenüber der Quellenausgangsspannung und/oder Erniedrigung der Quellenladespannung gegenüber der vom Wechselrichtereingang abgreifbaren Spannung.

Aus der DE 10 2018 107 177 A1 geht ein Antriebssystem für ein Elektrofahrzeug hervor, in dem ein Wechselrichter in einem Leistungsmodul des Antriebs aus einer Traktionsbatterie mit einer Versorgungsspannung versorgt wird. Zwischen der Traktionsbatterie und dem Wechselrichter ist ein Spannungswandler (VVC) angeordnet, der die Ausgangsspannung der Traktionsbatterie auf eine gewünschte Referenzspannung transformiert, die als Eingangsspannung des Wechselrichters dient. Der VVC kann das Spannungspotential der elektrischen Leistung, die von der Traktionsbatterie bereitgestellt wird, hochsetzen oder "hochtransformieren".

Die DE 10 2011 081 725 A1 offenbart eine mehrstufige Ladevorrichtung für eine Batterie eines batteriebetriebenen Elektromotors. Die mehrstufige Ladevorrichtung umfasst einen Tiefsetzsteller, einen Zwischenkreis und einen Hochsetzsteller, um aus einem von einem Stromanschluss bereitgestellten (ein- oder dreiphasigen) Wechselstrom einen geeigneten Lade-Gleichstrom zu erzeugen. Für den Hochsetzsteller und den Zwischenkreis werden dabei Komponenten des Elektroantriebs verwendet: der Elektromotor fungiert als Zwischenkreis und der Antriebsumsetzer fungiert als Hochsetzsteller. Die Ankoppelung des Elektromotors an den netzseitigen Tiefsetzsteller geschieht dabei derart, dass durch mindestens eine der mindestens drei Spulen des Elektroantriebs mindestens der halbe Ladestrom fließt.

Die Aufgabe wird erfindungsgemäß gelöst durch eine Vorrichtung mit den Merkmalen des Anspruchs 1 und ein Verfahren mit den Merkmalen des Anspruchs 5. Ausgestaltungen und Weiterbildungen der Erfindung ergeben sich aus den abhängigen Ansprüchen und der Beschreibung.

Gegenstand der Erfindung ist ein Antriebssystem für ein elektrisch angetriebenes Kraftfahrzeug. Das Antriebssystem umfasst mindestens eine HV-Batterie, mindestens eine mit Wechselstrom betriebene elektrische Maschine und einen zwischen der HV-Batterie und der elektrischen Maschine angeordneten Pulswechselrichter. Erfindungsgemäß umfasst der Pulswechselrichter einen einem Leistungsmodul vorgeschalteten Tiefsetzsteller, der dafür eingerichtet ist, eine Eingangsspannung des Pulswechselrichters in eine niedrigere Ausgangsspannung umzuwandeln, die am Eingang des Leistungsmoduls anliegt.

In einer Ausführungsform umfasst der Tiefsetzsteller einen Schalter, eine Diode, eine Induktivität und eine Kapazität. Der Schalter ist in einer Ausführungsform als elektronischer Schalter ausgeführt, beispielsweise als Transistor, insbesondere als IGBT oder MOS-FET.

In einer Ausführungsform des Antriebssystems beträgt die Ausgangsspannung des Tiefsetzstellers, welche als Eingangsspannung an den Eingängen des Leistungsmoduls anliegt, von 50 bis 80%, beispielsweise von 55 bis 70%, oder von 55 bis 60% der Eingangsspannung des Pulswechselrichters, d.h. der Eingangsspannung des Tiefsetzstellers. In einer weiteren Ausführungsform beträgt die Ausgangsspannung des Tiefsetzstellers, welche als Eingangsspannung an den Eingängen des Leistungsmoduls anliegt, von 400 bis 600 Volt, beispielsweise von 450 bis 550 Volt. In einer anderen Ausführungsform des Antriebssystems beträgt die Ausgangsspannung des Tiefsetzstellers, welche als Eingangsspannung an den Eingängen des Leistungsmoduls anliegt, von 200 bis 300 Volt.

In einer Ausführungsform des Antriebssystems beträgt die Eingangsspannung des Pulswechselrichters, d.h. die Eingangsspannung des Tiefsetzstellers, von 800 bis 1000 Volt, beispielsweise von 850 bis 950 Volt. In einer anderen Ausführungsform des Antriebssystems beträgt die Eingangsspannung des Pulswechselrichters, d.h. die Eingangsspannung des Tiefsetzstellers, von 350 bis 500 Volt.

Gegenstand der Erfindung ist auch ein Verfahren zur Erhöhung der Lebensdauer eines Leistungsmoduls in einem Pulswechselrichter eines Antriebssystems für ein elektrisch angetriebenes Kraftfahrzeug.

Erfindungsgemäß wird eine von einer HV-Batterie bereitgestellte Eingangsspannung des Pulswechselrichters, die der Ausgangsspannung der HV-Batterie entspricht, auf eine niedrigere Spannung verringert, die am Eingang des Leistungsmoduls anliegt. Es wird also die an den Leistungshalbleitern anliegende Gleichspannung verringert.

In einer Ausführungsform des Verfahrens wird die Eingangsspannung des Pulswechselrichters mittels eines Tiefsetzstellers auf die niedrigere Spannung verringert. Die niedrigere Spannung, welche auf die optimale Spannungslage (diese wird u.a. durch die angewandte Schaltfrequenz bestimmt) tiefgesetzt wurde, dient als Eingangsspannung des Leistungsmoduls, welches die Leistungshalbleiter enthält.

In einer Ausführungsform des Verfahrens beträgt die niedrigere Spannung von 50 bis 80%, beispielsweise von 55 bis 70%, oder von 55 bis 60% der Eingangsspannung. In einer weiteren Ausführungsform beträgt die niedrigere Spannung von 400 bis 600 Volt, beispielsweise von 450 bis 550 Volt. In einer anderen Ausführungsform beträgt die niedrigere Spannung von 200 bis 300 Volt.

In einer Ausführungsform des Verfahrens beträgt die Eingangsspannung des Pulswechselrichters von 800 bis 1000 Volt, beispielsweise von 850 bis 950 Volt. In einer anderen Ausführungsform des Verfahrens beträgt die Eingangsspannung des Pulswechselrichters von 350 bis 500 Volt.

Aktuelle Untersuchungen zeigen, dass durch die Absenkung der Eingangsspannung des Leistungsmoduls unter die Ausgangsspannung der HV-Batterie die Lebensdauer der Leistungshalbleiter signifikant erhöht werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung weiter beschrieben. Es zeigt:

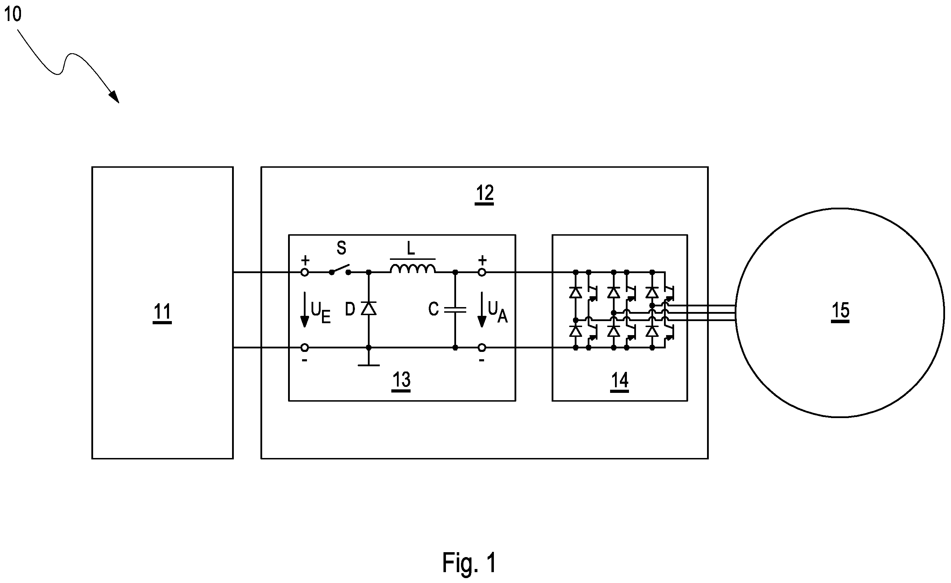

- Figur 1: eine schematische Darstellung einer Ausführungsform des erfindungsgemäßen Antriebssystems.

Figur 1 zeigt schematisch eine Ausführungsform des erfindungsgemäßen Antriebssystems 10. Die Pole einer HV-Batterie 11 sind mit den Eingängen eines Pulswechselrichters 12 verbunden, der ein Leistungsmodul 14 und einen Tiefsetzsteller 13 umfasst, der dem Leistungsmodul 14 vorgeschaltet ist. Die Ausgänge des Leistungsmoduls 14 sind mit einer elektrischen Maschine 15 verbunden, die von dem Pulswechselrichter 12 mit elektrischer Energie versorgt wird. Der Tiefsetzsteller 13 reduziert die Eingangsspannung U_{E}, die der Ausgangsspannung der HV-Batterie 11 entspricht, auf eine geringere Ausgangsspannung U_{A}, die am Eingang des Leistungsmoduls 14 anliegt. Durch die verringerte Eingangsspannung erhöht sich die Lebensdauer der Komponenten des Leistungsmoduls 14.

In einem Beispiel betrug die Eingangsspannung U_{E} (die Ausgangsspannung der HV-Batterie 11) 850 V. Bei einer Schaltfrequenz von 4 kHz wurde bei Herabsetzen der am Eingang des Leistungsmoduls 14 anliegenden Spannung U_{A} von 850 V auf 500 V eine Erhöhung der Lebensdauer der Leistungshalbleiter im Leistungsmodul 14 um ca. einen Faktor 2 gegenüber einem bei 850 V betriebenen Leistungsmodul beobachtet.

### Bezugszeichenliste

- 10: Antriebssystem
- 11: HV-Batterie
- 12: Pulswechselrichter
- 13: Tiefsetzsteller
- 14: Leistungsmodul
- 15: elektrische Maschine

## Patentansprüche

1. Antriebssystem (10) für ein elektrisch angetriebenes Kraftfahrzeug, umfassend mindestens eine HV-Batterie (11), mindestens eine mit Wechselstrom betriebene elektrische Maschine (15) und einen zwischen der HV-Batterie (11) und der elektrischen Maschine (15) angeordneten Pulswechselrichter (12), **dadurch gekennzeichnet, dass** der Pulswechselrichter (12) einen einem Leistungsmodul (14) vorgeschalteten Tiefsetzsteller (13) umfasst, der dafür eingerichtet ist, eine Eingangsspannung (U_{E}) des Pulswechselrichters (12) in eine niedrigere Ausgangsspannung (U_{A}) umzuwandeln, die am Eingang des Leistungsmoduls (14) anliegt.

2. Antriebssystem (10) nach Anspruch 1, worin der Tiefsetzsteller (13) einen Schalter (S), eine Diode (D), eine Induktivität (L) und eine Kapazität (C) umfasst.

3. Antriebssystem (10) nach Anspruch 1 oder 2, worin die Ausgangsspannung (U_{A}) von 50 bis 80% der Eingangsspannung (U_{E}) beträgt.

4. Antriebssystem (10) nach einem der Ansprüche 1 bis 3, worin die Eingangsspannung (U_{E}) von 800 bis 1000 Volt beträgt.

5. Antriebssystem (10) nach einem der Ansprüche 1 bis 3, worin die Eingangsspannung (U_{E}) von 350 bis 500 Volt beträgt.

6. Verfahren zur Erhöhung der Lebensdauer eines Leistungsmoduls (14) in einem Pulswechselrichter (12) eines Antriebssystems (10) für ein elektrisch angetriebenes Kraftfahrzeug, worin eine von einer HV-Batterie (11) bereitgestellte Eingangsspannung (U_{E}) des Pulswechselrichters (12) auf eine niedrigere Spannung (U_{A}) verringert wird, die am Eingang des Leistungsmoduls (14) anliegt.

7. Verfahren nach Anspruch 6, bei dem die Eingangsspannung (U_{E}) des Pulswechselrichters (12) mittels eines Tiefsetzstellers auf die niedrigere Spannung (U_{A}) verringert wird.

8. Verfahren nach Anspruch 6 oder 7, worin die niedrigere Spannung (U_{A}) von 50 bis 80% der Eingangsspannung (U_{E}) beträgt.

9. Verfahren nach einem der Ansprüche 6 bis 8, worin die Eingangsspannung (U_{E}) von 800 bis 1000 Volt beträgt.

10. Verfahren nach einem der Ansprüche 6 bis 8, worin die Eingangsspannung (U_{E}) von 350 bis 500 Volt beträgt.
